# EUROPEAN PATENT APPLICATION

(11) **EP 2 733 946 A1**
(43) Date of publication of application: **21.05.2014**
(21) Application number: 13178574.3
(22) Date of filing: 30.07.2013
(51) Int. Cl.: H04N 13/00, H04N 21/488, H04N 21/435

(54) **Stereoscopic Image processing apparatus with transmission formats and control method thereof**

(30) Priority: 20.11.2012 KR 20120131588
(71) Applicant: Samsung Electronics Co., Ltd, Gyeonggi-do 443-742 (KR)
(72) Inventor: Bak, Bong-gil, Gyeonggi-do (KR)
(74) Representative: Taor, Simon Edward William

(57) **Abstract**

An image processing apparatus and a control method are disclosed. The method of controlling an image processing apparatus which processes a video signal including first and second images alternately displayed in the display apparatus, and an auxiliary image which includes: adjusting the auxiliary image in accordance with a transmission format for transmitting the video signal from the image processing apparatus to the display apparatus; adding the adjusted auxiliary image to at least one of the first image and the second image; converting the first and second images added with the auxiliary image into a transmission image in which the first image and the second image are composed in accordance with the transmission format; and transmitting the transmission image.

## Description

Apparatuses and methods consistent with the exemplary embodiments relate an image processing apparatus and a control method. More particularly, exemplary embodiments relate to an image processing apparatus, which can improve visibility of an image in accordance with transmission formats, and a control method thereof.

In recent years, three-dimensional (3D) service has been briskly introduced in various fields. Such 3D service has begun from an analglyph method, which does not need separate hardware support and uses relatively inexpensive red-cyan glasses in an early stage. This has evolved into various 3D signal transmission methods such as a side-by-side method, a top-bottom method, a checker board method, etc. through positive endeavor of hardware manufacturers.

With the rapid evolution of various methods of transmitting a 3D video signal in recent years, display apparatuses supporting various standards for transmitting a 3D video signal coexist in households. Therefore, to optimize the quality of displayed 3D images, there is a need to properly control the image in accordance with input video signals of different formats, which are supported by various kinds of 3D display apparatuses which are spread to households.

One or more exemplary embodiments may provide an image processing apparatus, which can improve visibility of an image in accordance with transmission formats, and a control method thereof.

According to an aspect of an exemplary embodiment, a method of controlling an image processing apparatus which processes a video signal including first and second images alternately displayed in the display apparatus and an auxiliary image, includes: adjusting the auxiliary image in accordance with a transmission format which transmits the video signal from the image processing apparatus to the display apparatus; adding the adjusted auxiliary image to at least one of the first image and the second image; converting the first and second images added with the auxiliary image into a transmission image in which the first image and the second image are composed in accordance with the transmitting conversion format; and transmitting the composed transmission image.

The transmission format may include a side-by-side format or a top-bottom format.

The auxiliary image may include at least one of an icon, a letter and a subtitle contained in the image.

Adjusting the auxiliary image in accordance with the transmission format may include enlarging the auxiliary image.

Adjusting the auxiliary image in accordance with the transmission format may include changing a font of the letter in accordance with the transmission format.

Adjusting the auxiliary image in accordance with the transmission format may include changing contents of a subtitle in accordance with the transmission format.

The method may further include: receiving from the display apparatus information related to the transmission formats supportable by the display apparatus; and storing all the transmission formats supportable based on combination between the transmission format supported by the display apparatus and the transmission format supported by the image processing apparatus.

The method may further include: a user selecting one from among all the supportable transmission formats; and storing the selected transmission format.

In response to the transmission format being the side-by-side format, the adjusting the auxiliary image in accordance with the transmission format may include maximally suppressing in the auxiliary image a horizontal directional loss of a high frequency component.

In response to the transmission format being the top-bottom format, the adjusting the auxiliary image in accordance with the transmission format may include maximally suppressing in the auxiliary image a vertical directional loss of a high frequency component.

According to an aspect of an exemplary embodiment, an image processing apparatus which processes a video signal including first and second images alternately displayed in the display apparatus and an auxiliary image includes: an image processor configured to process the video signal; a controller configured to adjust the auxiliary image in accordance with a transmission format for transmitting the video signal from the image processing apparatus to the display apparatus, the controller is configured to add the adjusted auxiliary image to at least one of the first image and the second image, and is configured to convert the first and second images added with the auxiliary image into a transmission image in which the first image and the second image are composed in accordance with the transmission format; and a communicator configured to transmit the composed transmission image.

The transmission format may include a side-by-side format or a top-bottom format.

The auxiliary image may include at least one of an icon, a letter and a subtitle contained in the image.

The controller may control the image processor to enlarge the auxiliary image.

The controller may control the image processor to change a font of the letter in accordance with the transmission format.

The controller may control the image processor to change contents of a subtitle in accordance with the transmission format.

The image processing apparatus may further include: an information receiver configured to receive from the display apparatus information related to the transmission formats supportable by the display apparatus; and a storage configured to store all of the transmission formats supportable based on combination between the transmission format supported by the display apparatus and the transmission format supported by the image processing apparatus.

The image processing apparatus may further include a user input through which a user is configured to select one from among all of the supportable transmission formats, wherein the controller is configured to control the storage to store the selected transmission format.

In response to the transmission format being the side-by-side format, the controller may maximally suppress a horizontal directional loss of a high frequency component from the auxiliary image.

In response to the transmission format being the top-bottom format, the controller may maximally suppress a vertical directional loss of a high frequency component from the auxiliary image.

An aspect of an exemplary embodiment may provide an image processing apparatus configured to process a video signal comprising first and second images alternately displayed in a display apparatus and an auxiliary image including: a controller configured to adjust the auxiliary image in accordance with a transmission format and to add the adjusted auxiliary image to at least one of the first image and the second image, and is configured to convert the first and second images and the adjusted auxiliary image into a transmission image. The apparatus may further include an image processor configured to process the video signal.

The transmission format may comprise a side-by-side format or a top-bottom format. The controller may be configured to control the image processor in accordance with the transmitting control formats in order to enlarge the auxiliary image or to change a font of a letter or to change the contents of a subtitle.

An exemplary image processing apparatus may further provide an information receiver which receives from the display apparatus information related to the transmission formats supportable by the display apparatus; and a storage configured to store all of the transmission formats supportable based on combination of the transmission format supported by the display apparatus and the transmission format supported by the image processing apparatus.

An image processing apparatus may further provide a user input through which a user selects one from among all the supportable transmission formats, wherein the controller controls the storage to store the selected transmission format.

In response to the transmission format being the side-by-side format, the controller may maximally suppress a horizontal directional loss of a high frequency component of the auxiliary image.

In response to the transmission format being the top-bottom format, the controller may maximally suppress a vertical directional loss of a high frequency component of the auxiliary image.

An image processing apparatus may further include a communicator configured to communicate the transmission image to the display.

The above and/or other aspects will become apparent and more readily appreciated from the following description of exemplary embodiments, taken in conjunction with the accompanying drawings, in which:
FIG. 1 shows a side-by-side method and a top-bottom method as examples of transmission formats for transmitting a video signal from an image processing apparatus to a display apparatus;
FIG. 2 shows an example where visibility of an auxiliary image is deteriorated in accordance with the transmission formats for transmitting a video signal from the image processing apparatus to the display apparatus;
FIG. 3 is a block diagram of the image processing apparatus according to an exemplary embodiment;
FIG. 4 is a block diagram of the image processing apparatus according to another exemplary embodiment;
FIG. 5 is a flowchart for explaining a control method of the image processing apparatus according to an exemplary embodiment;
FIG. 6 is an example of a flow chart for explaining detailed operations of adjusting the auxiliary image of FIG. 5; and
FIG. 7 is another example of a flow chart for explaining detailed operations of adjusting the auxiliary image of FIG. 5.

Below, exemplary embodiments will be described in detail with reference to accompanying drawings.

The present disclosure is to prevent the visibility of an image from being deteriorated due to information loss that occurs while changing a format while transmitting a video signal from the image processing apparatus to the display apparatus. Such change in the format may be rendered for a 3D image, a dual view, etc.

Hereinafter, the change in the format for the 3D image will be described as a representative example, but not limited thereto.

An effect of a 3D image employs a method of respectively transmitting different images to a left eye and a right eye, and therefore signal transmission bands basically are doubly needed. Otherwise, if one transmission band is used to transmit a 3D video signal, the amount of image information has to be reduced by one half.

Until a full high definition (HD) frame packing format of a high definition multimedia interface (HDMI) 1.4 has been introduced, a method of transmitting a 3D video signal has to use the existing transmission band, as is. Therefore, a 3D video signal has been transmitted by reducing by one half the amount of information of an original video signal.

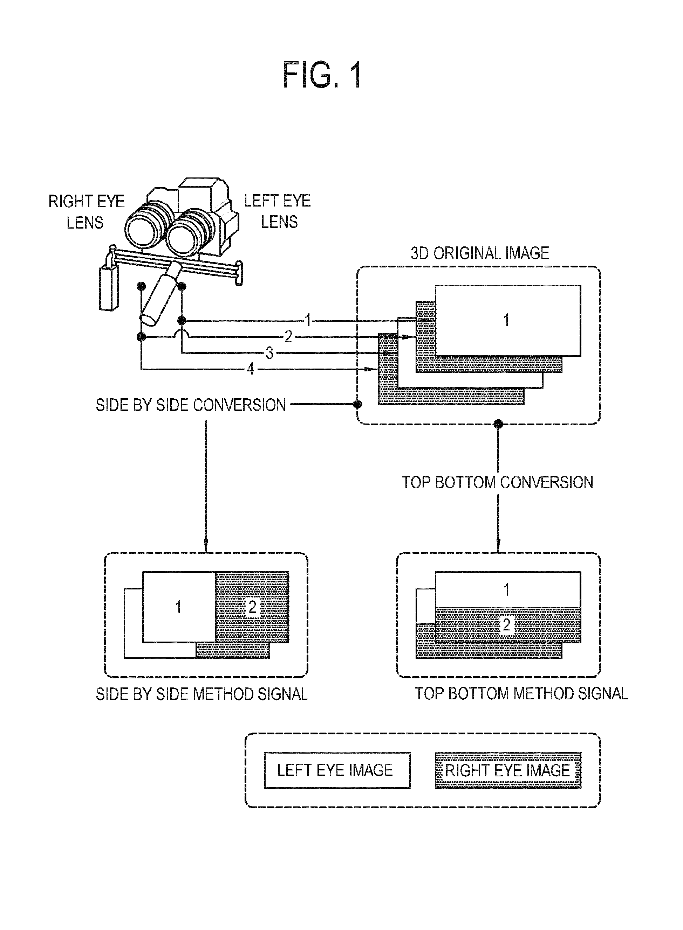

FIG. 1 shows a side-by-side method and a top-bottom method as examples of a transmission format for transmitting a video signal from an image processing apparatus to a display apparatus;

As shown in FIG. 1, a three-dimensional (3D) image taken by a 3D camera having two lenses is processed in accordance with two different video-signal transmitting methods, for example, format conversions based on a side-by-side method and a top-bottom method. Each of the side-by-side format conversion and the top-bottom format conversion reduces the resolution of an original image by one half, so that a 3D video signal can be transmitted in the same transmission band as that for two-dimensional (2D) an image. The side-by-side format conversion method space-compresses original image data in a horizontal direction, and the top-bottom format conversion method space-compresses original image data in a vertical direction, thereby reducing transmission capacity of each method by one half.

Due to loss of information, which unavoidably occurs while transmitting a video signal, there are various problems related to deterioration of image quality. In particular, while converting the formats for the side-by-side and top-bottom 3D images, visibility of a letter or the like data displayed on a screen depends on the conversion formats.

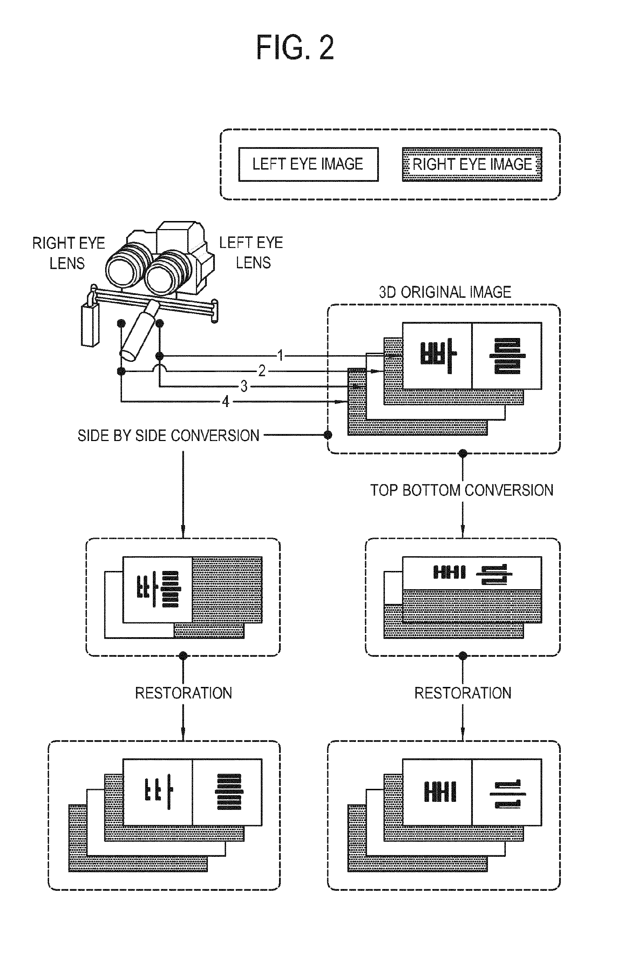

FIG. 2 shows an example where visibility of an auxiliary image is deteriorated in accordance with the transmission formats for transmitting a video signal from the image processing apparatus to the display apparatus.

As shown in FIG. 2, a word of 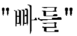 loses a high frequency component of a vertical axis while undergoing top-bottom format conversion and restoration, and therefore a letter of 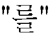 is seriously damaged. On the other hand, a high frequency component of a horizontal axis is lost while undergoing side-by-side conversion and restoration, and therefore a right consonant of 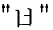 from 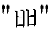 and a vowel of 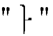 get close together, thereby damaging visibility of a letter of 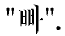

To achieve optimal image quality even though the information is lost as described above, image processing according to an exemplary embodiment is as follows.

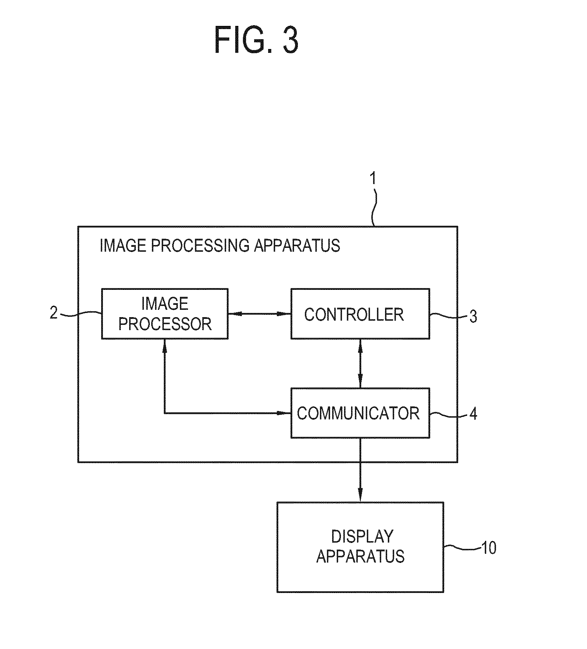

FIG. 3 is a block diagram of the image processing apparatus according to an exemplary embodiment;
As shown in FIG. 3, the image processing apparatus 1 includes an image processor 2 which processes a video signal containing a video signal and first and second images alternately displayed on the display apparatus; a controller 3 which adjusts the auxiliary image in accordance with a transmission format for transmitting a video single from the image processing apparatus 1 to the display apparatus 10, adds the adjusted auxiliary image to at least one of the first image and the second image, and controlling the image processor 2 to convert the first image and the second image added with the adjusted auxiliary image into a transmission image where the first image and the second image are combined in accordance with the transmission format; and a communicator 4 which transmits the transmission image.

Below, the transmission format for a 3D image will be described by way of an example.

A 3D video signal may include a left eye image and a right eye image alternately displayed for a 3D image effect, and an auxiliary image. In this case, the left eye image and the right eye image respectively correspond to the first image and the second image. In response to the top-bottom conversion format being used to transmit a video signal to the display apparatus through the existing transmission band, an original video signal is vertically compressed and thus a high frequency component existing in a vertical axis is lost. On the other hand, if the side-by-side conversion format is used, an original video signal is horizontally compressed and thus a high frequency component existing in a horizontal axis is lost. Here, the high frequency component corresponds to data such as a certain icon, a letter, and a subtitle contained in the auxiliary image.

Here, the auxiliary image is separately provided from the image processing apparatus. The auxiliary image is composed of at least one of the left eye image and the right eye image, and is transmitted to the display apparatus. The auxiliary image may include data such as an icon or a letter contained in a menu, and a subtitle.

The image processor 2 may enlarge the auxiliary image, change a font of a letter contained in the auxiliary image, or change a content of the subtitle, in accordance with the transmission format, prior to composing the auxiliary image with at least one left eye image and right eye image.

The image processor 2 operates to maximally suppress the loss of the high frequency component from the auxiliary image in the horizontal direction in response to the transmission format being side-by-side, and to maximally suppress the loss of the high frequency component from the auxiliary image in the vertical direction in response to the transmission format being top-bottom.

For example, in response to the transmission format being side-by-side and the auxiliary image containing a letter, the image processor 2 may operate to selectively use a font, of which letters are minimally affected by the loss of the high frequency component in the horizontal direction, from among various fonts representing the letter. In addition to the selection of the optimal fonts, the image processor 2 may operate to make the letters bold, italic, and so on. Also, the letter may be previously expanded in left and right directions. Likewise, in response to the transmission format being top-bottom and the auxiliary image contains a letter, the image processor 2 may operate to selectively use a font, of which letters are minimally affected by the loss of the high frequency component in the vertical direction, from among various fonts representing the letter. In addition to the selection of the optimal fonts, the image processor 2 may operate to make the letters bold, italic, and so on. Also, the letter may be previously expanded in up and down directions.

Therefore, even though the resolution of the transmission image is reduced in half while the format is converted for 3D transmission or for dual view transmission, the visibility of the letter is preserved.

Also, for example, in response to the transmission format being top-bottom and the auxiliary image containing a subtitle, the image processor 2 may operate to select a subtitle that is minimally affected by the loss of the high frequency component in the vertical direction, from among previously stored subtitles. In response to the subtitles being displayed in two lines and a space between two lines becomes narrow due to the top-bottom transmission format, the space between the lines may become wide by enlarging the auxiliary image, or a subtitle displayed in one line may be selected. The subtitle displayed in one line may be obtained by abstracting the contents of the subtitle displayed in two lines. Therefore, even though the resolution of the transmission image in the vertical direction is reduced in half while the format is converted for the transmission, the visibility of the subtitle is preserved.

Besides, in response to the auxiliary image including an icon or information having a certain shape which corresponds to a high frequency component, the image processor 2 processes and prevents the visibility of the icon or information having a certain shape from being deteriorated prior to the auxiliary image and at least one of the left eye image and the right eye image being composed into the transmission image.

Meanwhile, the foregoing operations for improving the visibility may be equally applied to the transmitting format conversion for a dual view. Also, the operations of the image processor 2 to improve the visibility may be achieved through a software program.

The transmission format for giving a 3D image effect may be selected by an image processing apparatus or a broadcasting station from among various transmission formats. Such a transmission format has to be supported by the display apparatus 10 in order to display a video signal. Therefore, the image processing apparatus 2 may receive information related to the transmission formats supportable by the display apparatus 10 through the communication unit 4, and may store the conversion formats.

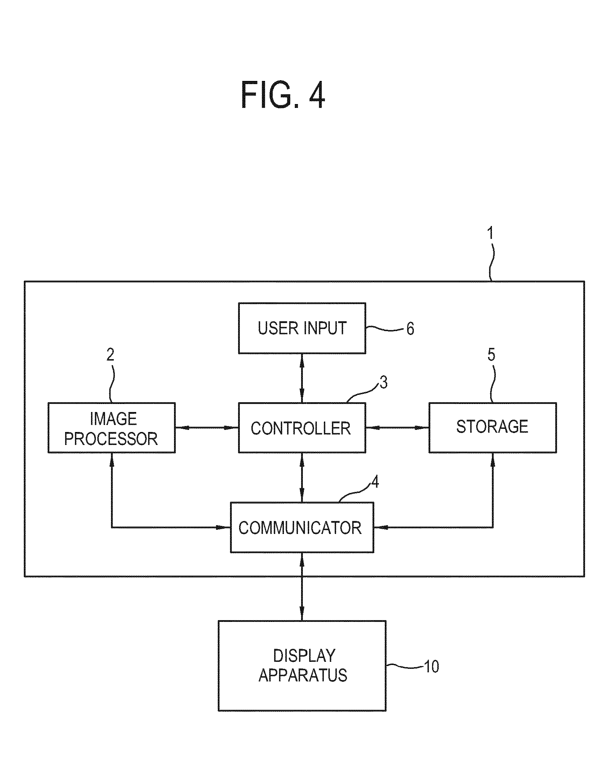

FIG. 4 is a block diagram of the image processing apparatus according to another exemplary embodiment.

As shown in FIG. 4, the image processing apparatus 1 may further include storage 5 and a user input 6. The image processing apparatus 1 receives from the display apparatus 10 through the communicator 4 the information relating to the transmission format, and stores the information in the storage 5.

Accordingly, the image processing apparatus 1 may compare the transmission formats supported by the display apparatus 10, the information of which is stored in the storage 5, with the transmission formats supported by the image processing apparatus 1, and may select a transmission format, which is optimized to prevent the visibility of the auxiliary image from being deteriorated, from among the supportable transmission formats.

Meanwhile, a user may select a desired transmission format from among the transmission formats supported by both the image processing apparatus 1 and the display apparatus 10. In this case, the image processing apparatus 1 receives a user's input through the user input 6. Thus, a user can select a transmission format, which shows the best visibility of the auxiliary image, from among various transmission formats.

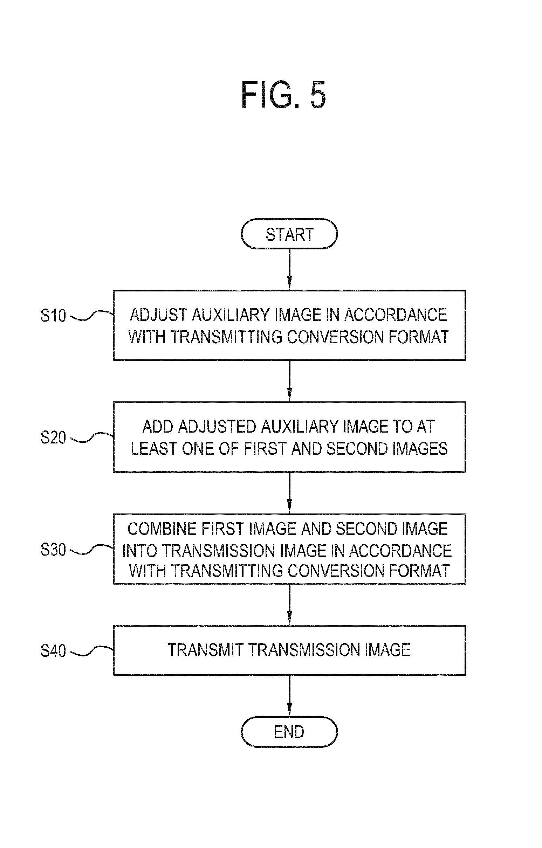

FIG. 5 is a flowchart which explains a control method of the image processing apparatus, according to an exemplary embodiment.

At operation S10, the image processor 2 of the image processing apparatus 1, which processes a video signal containing the auxiliary image and the first and second images alternately displayed on the display apparatus, first adjusts the auxiliary image which corresponds to the transmission format for transmitting the video signal from the image processing apparatus to the display apparatus under control of controller 3.

Such adjustment is performed before the auxiliary image is composed of at least one of a left eye image and a right eye image, which is to maximally suppress the loss of the high frequency component from the auxiliary image in the horizontal direction in response to the transmission format being side-by-side, or to maximally suppress the loss of the high frequency component from the auxiliary image in the vertical direction in response to the transmission format being top-bottom.

For example, the adjustment may include operations of enlarging the auxiliary image in accordance with the transmission formats, changing the font of the letter contained in the auxiliary image, changing the contents of the subtitle, etc.

Therefore, even though the resolution of the transmission image in the horizontal direction is reduced in half while the format is converted for the transmission, the visibility of the subtitle is preserved.

Below, the operation S10 of adjusting the auxiliary image will be described in more detail by way of example, in response to the transmission format for transmitting a video signal from the image processing apparatus to the display apparatus being side-by-side or top-bottom.

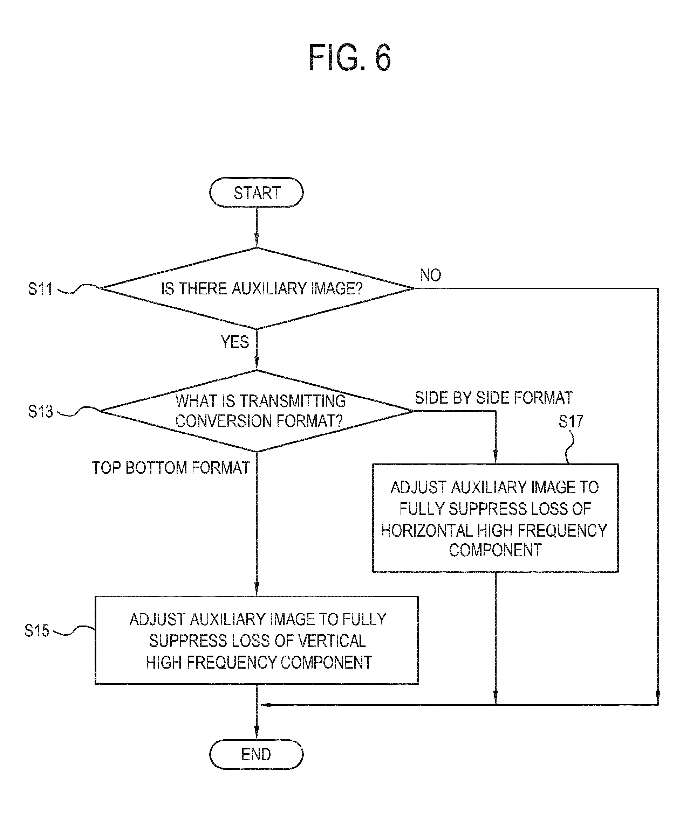

FIG. 6 is an example of a flow chart which explains detailed operations of adjusting the auxiliary image of FIG. 5.

Prior to adjusting the auxiliary image, the controller 3 of the image processing apparatus 1 determines whether a video signal includes the auxiliary image in addition to the first and second images (S11).

In response to the video signal including the auxiliary image, the controller 3 determines the transmission format (S13). In response to a determination that the transmission format is top-bottom, the controller 3 adjusts the auxiliary image so that the high frequency component of the auxiliary image in the vertical direction is maximally suppressed (S15). For example, in response to the auxiliary image containing a letter, the controller 3 controls the image processor 2 to select a font, of which letters are minimally affected by the loss of the high frequency component in the vertical direction, from among various fonts representing the letter, to make the letters bold, italic, and so on., or to expand the letters upward and downward, before converting the auxiliary image into the transmission image. On the other hand, in response to a determination that the transmission format is side-by-side, the controller 3 adjusts the auxiliary image so that the high frequency component of the auxiliary image in the horizontal direction is maximally suppressed (S17). For example, in response to the auxiliary image containing a letter, the controller 3 controls the image processor 2 to select a font, of which letters are minimally affected by the loss of the high frequency component in the horizontal direction, from among various fonts representing the letter, in order to make the letters bold, italic, etc., or to expand the letters leftward and rightward, before converting the auxiliary image into the transmission image.

Therefore, even though the resolution of the transmission image is reduced by one half while the format is converted for 3D transmission or to dual view transmission, the visibility of the subtitle is preserved.

Meanwhile, in response to the transmission format for transmitting a video signal from the image processing apparatus to the display apparatus being a format other than side-by-side and top-bottom, the operations S10 of adjusting the auxiliary image is performed as follows.

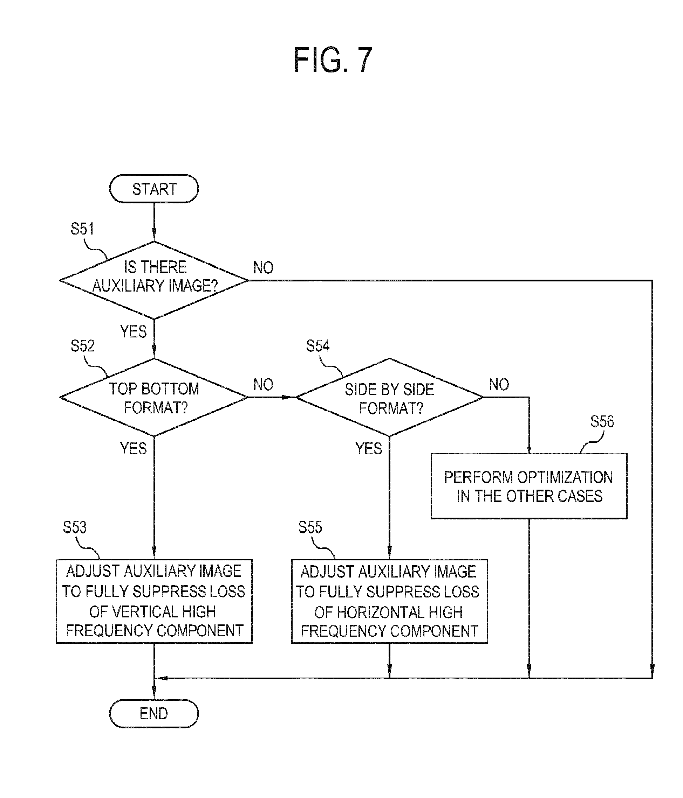

FIG. 7 is another example of a flow chart which explains detailed operations of adjusting the auxiliary image of FIG. 5.

Prior to adjusting the auxiliary image, the controller 3 of the image processing apparatus 1 determines whether a video signal includes the auxiliary image in addition to the first and second images (S51).

In response to the video signal including the auxiliary image, the controller 3 determines whether the transmission format is top-bottom (S52). In response to a determination that the transmission format is top-bottom, the controller 3 adjusts the auxiliary image so that the high frequency component of the auxiliary image in the vertical direction is maximally suppressed (S53). For example, in response to the auxiliary image containing a letter, the controller 3 controls the image processor 2 to select a font, of which letters are minimally affected by the loss of the high frequency component in the vertical direction, from among various fonts representing the letter, to make the letters bold, italic, etc., or to expand the letters upward and downward, before converting the auxiliary image into the transmission image. On the other hand, in response to a determination that the transmission format is not top-bottom, the controller 3 determines whether the transmission format is side-by-side (S54). In response to a determination that the transmission format is side-by-side, the controller 3 adjusts the auxiliary image so that the high frequency component of the auxiliary image in the horizontal direction is maximally suppressed (S55). For example, in response to the auxiliary image containing a letter, the controller 3 controls the image processor 2 to select a font, of which letters are minimally affected by the loss of the high frequency component in the horizontal direction, from among various fonts representing the letter, in order to make the letters bold, italic, etc., or to expand the letters leftward and rightward, before converting the auxiliary image into the transmission image. In response to a determination that the transmission format is not side-by-side, the controller 3 adjusts the auxiliary image so that the high frequency component of the auxiliary image is maximally suppressed (S56).

Therefore, even though the resolution of the transmission image is reduced in half while the format is converted for 3D transmission or for dual view transmission, the visibility of the subtitle is preserved.

Referring to FIG. 5, in response to the adjustment being completed as described above, the image processor 2 adds the auxiliary image adjusted under the control of the controller 3 to at least one of the first image and the second image (S20), converts the first and second images added with the adjusted auxiliary image into the transmission image in which the first and second images are composed in accordance with the transmission format (S30), and transmits the transmission image to the display apparatus 10 (S40).

As described above, there are provided an image processing apparatus, which can improve visibility of an image in accordance with transmission formats, and a control method thereof.

Although a few exemplary embodiments have been shown and described, it will be appreciated by those skilled in the art that changes may be made in these exemplary embodiments without departing from the principles of the invention, the scope of which is defined in the appended claims and their equivalents.

## Claims

1. A method of controlling an image processing apparatus which processes a video signal comprising first and second images configured to be alternately displayed in the display apparatus and an auxiliary image, the method comprising:
adjusting the auxiliary image in accordance with a transmission format for transmission of the video signal from the image processing apparatus to the display apparatus;
adding the adjusted auxiliary image to at least one of the first image and the second image;
converting the first and second images with the added auxiliary image into a transmission image in which the first image and the second image are composed in accordance with the transmission format.

2. The method according to claim 1, wherein the transmission format comprises a side-by-side format or a top-bottom format, and
wherein in response to the transmission format being the side-by-side format or the top-bottom format, the adjusting the auxiliary image in accordance with the transmission format comprises maximally suppressing a horizontal or vertical directional loss of a high frequency component of the auxiliary image.

3. The method according to claim 1 or 2, wherein the auxiliary image comprises at least one of an icon, a letter and a subtitle contained in the image, and
wherein adjusting the auxiliary image in accordance with the transmission format comprises changing at least one of a font of the letter and contents of a subtitle in accordance with the transmission format.

4. The method according to any one of claims 1 to 3, wherein adjusting the auxiliary image in accordance with the transmission format comprises enlarging the auxiliary image.

5. The method according to any one of claims 1 to 3, further comprising:
receiving from the display apparatus information related to the transmission formats supportable by the display apparatus; and
storing all of the transmission formats supportable based on combination of the transmission format supported by the display apparatus and the transmission format supported by the image processing apparatus.

6. The method according to claim 5, further comprising:
selecting one of the transmission formats by a user from among all the supportable transmission formats; and
storing the selected transmission format.

7. An image processing apparatus configured to process a video signal comprising first and second images alternately displayed in a display apparatus and an auxiliary image, the image processing apparatus comprising:
a controller configured to adjust the auxiliary image in accordance with a transmitting conversion format and to add the adjusted auxiliary image to at least one of the first image and the second image, and is configured to convert the first and second images and the adjusted auxiliary image into a transmission image.

8. The image processing apparatus according to claim 7, further including an image processor configured to process the video signal.

9. The image processing apparatus according to claim 7 or 8, wherein the transmitting conversion format comprises a side-by-side format or a top-bottom format.

10. The image processing apparatus according to claim 8 or 9 when dependent on claim 8, wherein the controller is configured to control the image processor in accordance with the transmitting control formats in order to enlarge the auxiliary image or to change a font of a letter or to change the contents of a subtitle.

11. The image processing apparatus according to any one of claims 7 to 10, further comprising:
an information receiver which receives from the display apparatus information related to the transmitting conversion formats supportable by the display apparatus; and
a storage configured to store all of the transmitting conversion formats supportable based on combination of the transmitting conversion format supported by the display apparatus and the transmitting conversion format supported by the image processing apparatus.

12. The image processing apparatus according to claim 11, further comprising a user input through which a user selects one from among all the supportable transmitting conversion formats,
wherein the controller controls the storage to store the selected transmitting conversion format.

13. The image processing apparatus according to claim 9 or any claim when dependent on claim 9, wherein in response to the transmitting conversion format being the side-by-side format, the controller is arranged to maximally suppress a horizontal directional loss of a high frequency component of the auxiliary image.

14. The image processing apparatus according to claim 9 or any claim when dependent on claim 9, wherein in response to the transmitting conversion format is the top-bottom format, the controller is arranged to maximally suppress a vertical directional loss of a high frequency component of the auxiliary image.

15. The image processing apparatus according to any one of claims 7 to 14, further comprising a communicator configured to communicate the transmission image to the display.
